# EUROPÄISCHE PATENTSCHRIFT

(11) **EP 4 133 607 B1**
(45) Veröffentlichungstag und Bekanntmachung des Hinweises auf die Patenterteilung: **31.01.2024**
(21) Anmeldenummer: 21715905.2
(22) Anmeldetag: 01.04.2021
(51) Int. Cl.: H04B 5/00

(54) **KOPPLUNGSEINRICHTUNG ZUR DRAHTLOSEN DATEN- UND ENERGIEÜBERTRAGUNG SOWIE EIN KOPPLUNGSSYSTEM ZUR DRAHTLOSEN DATEN- UND ENERGIEÜBERTRAGUNG**
COUPLING DEVICE FOR WIRELESS DATA AND ENERGY TRANSFER, AND COUPLING SYSTEM FOR WIRELESS DATA AND ENERGY TRANSFER
DISPOSITIF DE COUPLAGE POUR TRANSFERT DE DONNÉES ET D'ÉNERGIE SANS FIL, ET SYSTÈME DE COUPLAGE POUR TRANSFERT DE DONNÉES ET D'ÉNERGIE SANS FIL

(30) Priorität: 09.04.2020 BE 202005236
(43) Veröffentlichungstag der Anmeldung: 15.02.2023
(73) Patentinhaber: PHOENIX CONTACT GMBH & CO. KG, 32825 Blomberg (DE)
(72) Erfinder: KLEIN, Daniel, 32825 Blomberg (DE); HAKEMEYER, Frank, 32805 Horn-Bad Meinberg (DE); STEMME, Maik, 31749 Auetal (DE)
(74) Vertreter: Blumbach · Zinngrebe Patentanwälte PartG mbB
(86) Internationale Anmeldenummer: PCT/EP2021/058705
(87) Internationale Veröffentlichungsnummer: WO 2021/204694

(56) Entgegenhaltungen:
- DE-A1-102017 101 891
- DE-B3-102012 212 254
- US-A1- 2018 219 334

## Beschreibung

Die Erfindung betrifft eine Kopplungseinrichtung zur drahtlosen Daten- und Energieübertragung sowie ein Kopplungssystem zur Daten- und Energieübertragung. Steckverbindersysteme zur Daten- und Energieübertragung sind bekannt. Müssen Steckverbinder häufig gelöst und wieder zusammengesteckt werden, ist der Verschleiß hinsichtlich der Kontakte, auch wenn diese sehr hochwertig ausgebildet sind, recht hoch. Ein solches Szenario ist beispielsweise aus der industriellen Robotik bekannt, bei der ein Roboterarm beispielsweise häufig Wechselwerkzeuge greifen und auswechseln muss. Hierbei muss das Wechselwerkzeug mit dem Roboterarm mechanisch und elektrisch verbunden werden. Die mechanische Verbindung geschieht über eine Kupplung, während die elektrische Verbindung häufig über Steckverbinder erfolgt, die mit verschleißarmen Goldkontakten ausgestattet sind.

Der Erfindung liegt daher die Aufgabe zugrunde, eine Kopplungseinrichtung sowie ein Kopplungssystem bereitzustellen, welche insbesondere einen Industrie-Steckverbinder ersetzen und durch eine platzsparende Anordnung der Komponenten innerhalb der Kopplungseinrichtung sowohl eine effiziente drahtlose Energieübertragung als auch eine schnelle drahtlose Datenübertragung ermöglichen können. Kopplungseinrichtungen nach dem Oberbegriff der vorliegenden Erfindung sind aus DE 10 2012 212254 B3 und DE 10 2017 101891 A1 bekannt.

Ein Kerngedanke der Erfindung kann darin gesehen werden, eine Kopplungseinrichtung zur drahtlosen Daten- und Energieübertragung zu schaffen, die dazu ausgebildet ist,
i) Versorgungsenergie mithilfe von einer als Primärspule fungierenden Luftspule und einem eine Durchgangsöffnung aufweisenden Ferritkörper induktiv zu einer Sekundärspule einer als Sekundärkoppler fungierenden Kopplungseinrichtung zu übertragen und
ii) Daten mittels einer Kommunikationseinrichtung in Form elektromagnetischer Signale in einer Hauptabstrahlrichtung durch die Durchgangsöffnung des Ferritkörpers und durch die Luftspule hindurch zu einer komplementären Kommunikationseinrichtung des Sekundärkoppler zu senden. Dank dieser Maßnahme entsteht eine kompakte Bauweise, die eine effizienten drahtlose Energie- und Datenübertragung zwischen zwei Kopplungseinrichtungen ermöglicht. Eine schnelle Datenübertragung kann insbesondere dadurch erreicht werden, dass die Kommunikationseinrichtung hochfrequente elektromagnetische Signale im Sinne einer Richtfunkübertragung aussenden kann.

Die oben genannte technische Aufgabe wird durch die Merkmale des Anspruchs 1, durch die Merkmale des Anspruchs 3 und durch die Merkmale des Anspruchs 15 gelöst.

Vorteilhafte Ausgestaltungen und Weiterbildungen sind Gegenstand der Unteransprüche.

Die Erfindung wird nachfolgend anhand einiger Ausführungsbeispiele in Verbindung mit den beiliegenden Zeichnungen näher erläutert. Es zeigen:
- Figur 1: eine beispielhafte Kopplungseinrichtung mit geschlossenem Gehäuse,
- Figur 2: die in Figur 1 gezeigte Kopplungseinrichtung mit teilweise entferntem Gehäuse,
- Figur 3: die Unteransicht des in Figur 1 gezeigten Deckels mit am Deckel montiertem Ferritkörper und montierter Luftspule,
- Figur 4: die in Figur 2 und 3 gezeigte, auf dem Ferritkörper angeordnete Luftspule,
- Figur 5a: eine schematische Darstellung der in Figur 2 gezeigten Kopplungseinrichtung, bei der die Kommunikationseinrichtung im Abstand zum Ferritkörper angeordnet ist,
- Figuren 5b und 5c: schematische Darstellungen einer alternativen Kopplungseinrichtung, bei der die Kommunikationseinrichtung BERICHTIGTES BLATT (REGEL 91) ISA/EP wenigstens teilweise in der Durchgangsöffnung des Ferritkörpers angeordnet ist,
- Figur 6: eine, auf einer Leiterplatte montierte Kommunikationseinrichtung, die räumlich getrennt eine Sendeantenne und eine Empfangsantenne aufweist,
- Figur 7: die in Figur 2 und in Figur 5a gezeigte Kommunikationseinrichtung, welche eine einzige als Sende- und Empfangsantenne arbeitende Antenneneinrichtung aufweist,
- Figur 8: eine alternative, auf einer Leiterplatte montierte Kommunikationseinrichtung, die einen optischen Sender und einen optischen Empfänger aufweist, und
- Fig. 9: ein beispielhaftes Kopplungssystem, welches die in den Figuren 2 und 5a gezeigte Kopplungseinrichtung im gekoppelten Zustand mit einer komplementären Kopplungseinrichtung zeigt, die jeweils mit einem elektrischen und/oder elektronischen Gerät verbunden sind.

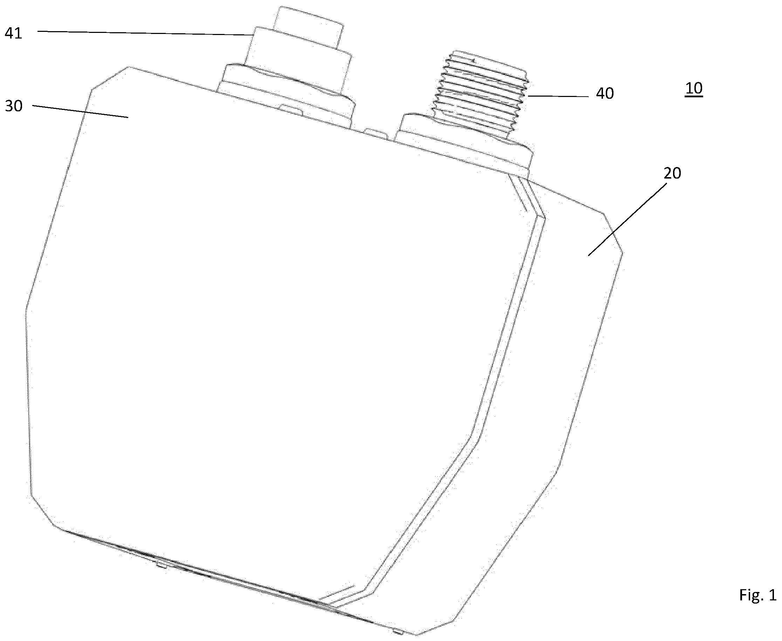

Figur 1 zeigt eine beispielhafte Kopplungseinrichtung 10 zur drahtlosen Daten- und Energieübertragung, die in vorteilhafter Weise ein zweiteiliges Gehäuse aufweisen kann, welches ein Basisteil 20 und einen Deckel 30, der zum Schließen des Basisteils 20 ausgebildet ist, aufweist. Ferner weist die Kopplungseinrichtung 10 einen Energieversorgungsanschluss 40 auf, an den eine externe Energieversorgungsquelle anschließbar ist. Zudem weist die Kopplungseinrichtung 10 eine Kommunikationsschnittstelle 41 auf, über die Daten zu einer externen Datensenke gesendet, oder von einer externen Datenquelle empfangen werden können. Die Kopplungseinrichtung 10 ist insbesondere zum Einsatz in einer industriellen Umgebung, wie zum Beispiel in roboterunterstützten Automatisierungsanlagen geeignet.

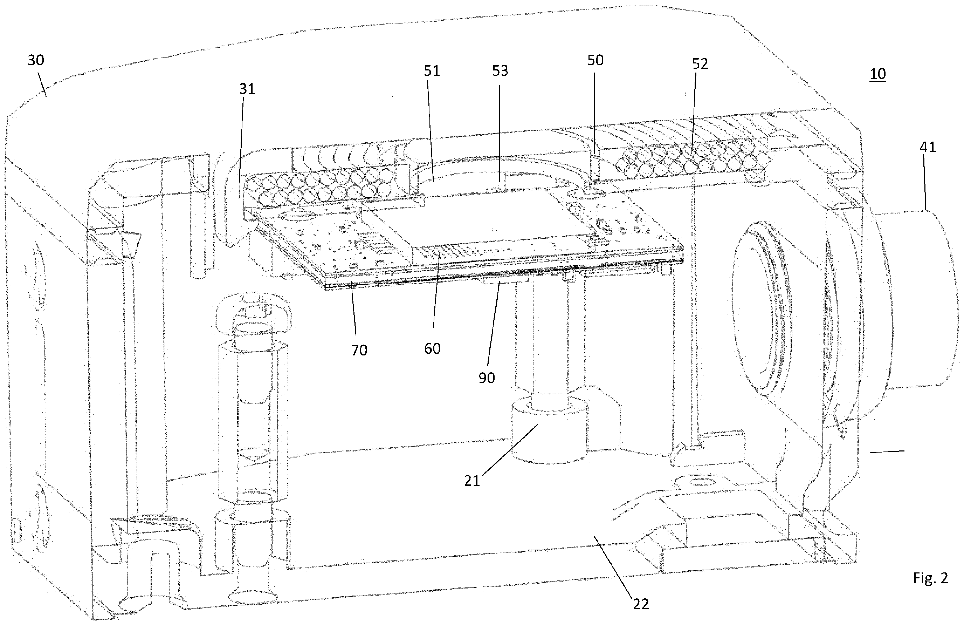

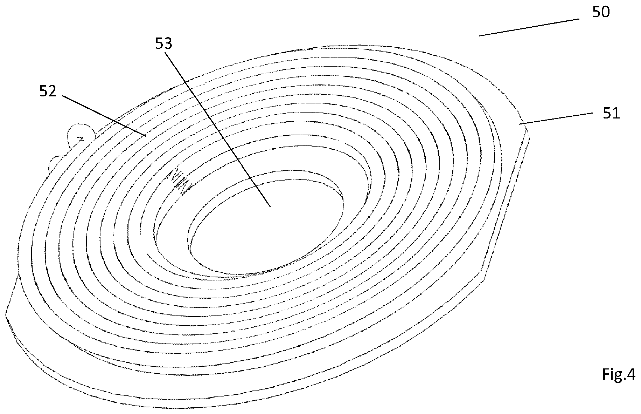

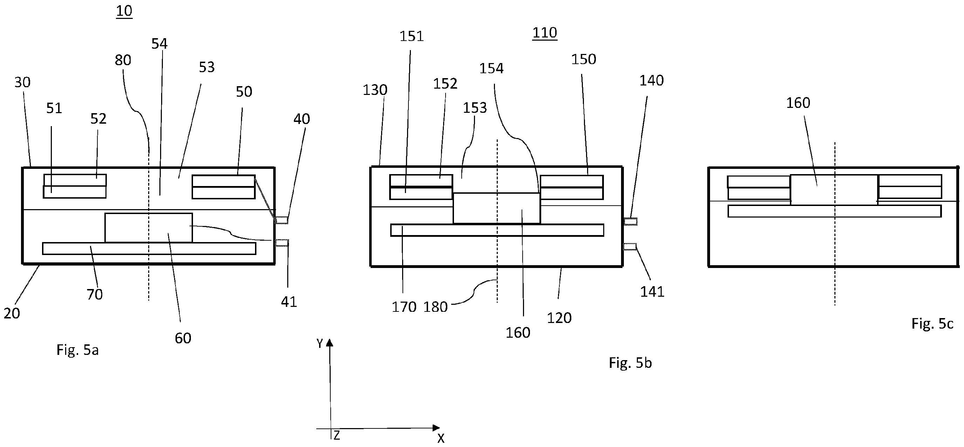

In Figur 2 ist die in Figur 1 gezeigte Kopplungseinrichtung 10 mit teilweise entferntem Gehäuse 20, 30 dargestellt. In dem Gehäuse 20, 30 ist eine Kommunikationseinrichtung 60 zur drahtlosen Datenübertragung angeordnet. Die Kommunikationseinrichtung 60 ist insbesondere zum Abstrahlen von elektromagnetischen Signalen in einer Hauptabstrahlrichtung ausgebildet. Dies bedeutet, dass die Kommunikationseinrichtung 60 derart ausgebildet ist, dass sich der größte Teil ihrer abgestrahlten Energie entlang der Hauptabstrahlrichtung ausbreitet. Wie insbesondere in Figur 5a zu sehen, verläuft die Hauptabstrahlrichtung parallel zu einer Achse, hier parallel zur y-Achse des in Figur 5a gezeigten Koordinatensystems. Darüber hinaus ist in dem Gehäuse 20, 30 eine drahtlose Energieübertragungseinrichtung 50 angeordnet, die einen Ferritkörper 51 mit einer Durchgangsöffnung 53 sowie wenigstens eine, eine Öffnung 54 definierende Luftspule 52 aufweist, die am Ferritkörper 51 angeordnet ist, aufweist. In Figur 2 sind beispielsweise zwei übereinander angeordnete Luftspulen angedeutet. Die Energieübertragungseinrichtung 50 ist in Figur 4 noch einmal isoliert dargestellt.

Wie in Fig. 4 zu sehen, kann der Ferritkörper beispielsweise eine im Wesentlichen scheibenförmige Ausgestaltung aufweisen, in der zentrisch die Durchgangsöffnung 53 ausgebildet sein kann. Der Innendurchmesser der Durchgangsöffnung 53 kann beispielsweise 14mm betragen, während der Durchmesser des scheibenförmigen Ferritkörpers 51 beispielsweise 45 mm betragen kann. An einer Oberfläche des Ferritkörpers 5, die vorzugsweise parallel zum Deckel 30 verläuft, ist die Luftspule 52 derart angeordnet, dass die durch die Luftspule 52 definierte Öffnung 54 fluchtend zur Durchgangsöffnung 53 liegt. Angemerkt sei, dass in der zum Deckel 30 gerichteten Oberfläche des Ferritkörpers 51 eine Nut ausgenommen sein kann, in die die wenigstens eine Luftspule 52 eingelegt werden kann. Hierdurch kann die Lage der Luftspule 52 bezüglich des Ferritköpers 51 festgelegt werden.

Wie in Figur 2 weiter zu sehen, kann die Energieübertragungseinrichtung 50 beispielsweise über Rastnasen 31, die am Deckel 30 angeformt sein können, am Deckel lösbar gehaltert sein. In der beispielhaften Darstellung gemäß Figur 2 und Figur 5a ist die wenigstens eine Luftspule 52 zwischen dem Ferritkörper 51 und dem Deckel 30 angeordnet.

Wie insbesondere in Figur 5a zu sehen, sind die Kommunikationseinrichtung 60, der Ferritkörper 51 und die Luftspule 52 bezüglich der Hauptabstrahlrichtung, die in y-Richtung weist, hintereinander und in verschiedenen Ebenen, die jeweils parallel zu einer durch die x- und z-Achse aufgespannten Ebene liegen, angeordnet. Mit anderen Worten: bezüglich der in Figur 5a dargestellten Kopplungseinrichtung 10 ist die Kommunikationseinrichtung 60 unterhalb und im Abstand zur Energieübertragungseinrichtung 50 angeordnet.

Wie in Figur 2 und in Figur 5a dargestellt, sind die Luftspule 52, der Ferritkörper 51 und die Kommunikationseinrichtung 60 derart zueinander angeordnet, dass von der Kommunikationseinrichtung 60 abgestrahlte elektromagnetische Signale sich in der Hauptabstrahlrichtung 80 durch die Durchgangsöffnung 53 des Ferritkörpers 51 und durch die Öffnung 54 der wenigstens einen Luftspule 52 ausbreiten. Die Durchgangsöffnung 53 und die Öffnung 54 der Luftspule 52 bilden somit eine Art Trichter für die von der Kommunikationseinrichtung 60 abgestrahlten elektromagnetischen Signale, mittels derer Daten einer Datenquelle übertragen werden können.

Zu sehen ist in Figur 2 ebenfalls die Kommunikationsschnittstelle 41 der Kopplungseinrichtung 10.

Der Deckel 30 weist vorzugsweise einen für elektromagnetische Wellen durchlässigen Bereich auf, wobei die Hauptabstrahlrichtung 80 orthogonal zu dem für elektromagnetische Wellen durchlässigen Bereich verläuft, wie dies insbesondere in Fig. 5a ersichtlich ist. Der für elektromagnetische Wellen durchlässige Bereich des Deckels 30 befindet sich insbesondere fluchtend zu der Durchgangsöffnung 53 des Ferritkörpers 51 und der Öffnung 54 der Luftspule 52. Vorzugsweise ist der gesamte Deckel 30 aus einem für elektromagnetische Wellen durchlässigen Kunststoffmaterial hergestellt.

Wie in Figur 2 gezeigt, kann das Basisteil 20 des Gehäuses eine Grundwandung 22 aufweisen, zu der parallel eine Leiterplatte 70, an der die Kommunikationseinrichtung 60 montiert ist, angeordnet sein kann. Wie insbesondere in Figur 5a zu sehen, sind im montierten Zustand die Leiterplatte 70, die wenigstens eine Luftspule 52 und der Ferritkörper 51 jeweils in verschiedenen Ebene angeordnet, die zueinander parallel und parallel zu einer durch die x- und z-Achse aufgespannten Ebene angeordnet sind. Wie insbesondere in Figur 5a zu sehen, verläuft die Hauptstrahlrichtung 80 senkrecht zu diesen Ebenen.

Gemäß der beanspruchten Erfindung weist die Kommunikationseinrichtung 60 eine Antenneneinrichtung auf, die zum Abstrahlen von Funksignalen in der Hauptabstrahlrichtung 80 ausgebildet ist, wobei die abgestrahlten Funksignale in einem ersten Frequenzband liegen. Vorzugsweise wird ein Frequenzband verwendet, welches eine ausreichend hohe Bandbreite zur Verfügung stellt, um beispielsweise gleichzeitig über unterschiedliche Frequenzen Funksignale senden und empfangen zu können. Dabei erweist es sich als vorteilhaft, ein Frequenzband zu verwenden, welches relativ schlechte Ausbreitungseigenschaften aufweist. Erfindungsgemäß wird hierfür ein ISM-Band im Gigahertz-Bereich verwendet. Das erste Frequenzband liegt innerhalb eines Frequenzbereichs von 57 - 66 GHz, oder in einem höheren Frequenzbereich.

Die eine Antenneneinrichtung aufweisende Kommunikationseinrichtung 60 ist ferner zum Empfangen von Funksignalen in einem zweiten Frequenzband ausgebildet. Die empfangenen Funksignale weisen eine Hauptempfangsrichtung auf, die mit der Hauptabstrahlrichtung 80 zusammenfällt, wenn zum Senden und Empfangen eine einzige Antenne benutzt wird, und die sich parallel zur Hauptabstrahlrichtung 80 durch die Durchgangsöffnung 53 des Ferritkörpers 51 und durch die Öffnung 54 der wenigstens einen Luftspule 52 erstreckt, wenn zum Senden und Empfangen räumlich getrennt eine Sendeantenne und eine Empfangsantenne verwendet werden. Das erste Frequenzband und das zweite Frequenzband sind vorzugsweise unterschiedlich, sie können aber auch gleich sein. Vorzugsweise ist auch das zweite Frequenzband ein ISM-Band im Gigahertz-Bereich, welches vorzugsweise innerhalb eines Frequenzbereichs von 57-66 GHz liegt.

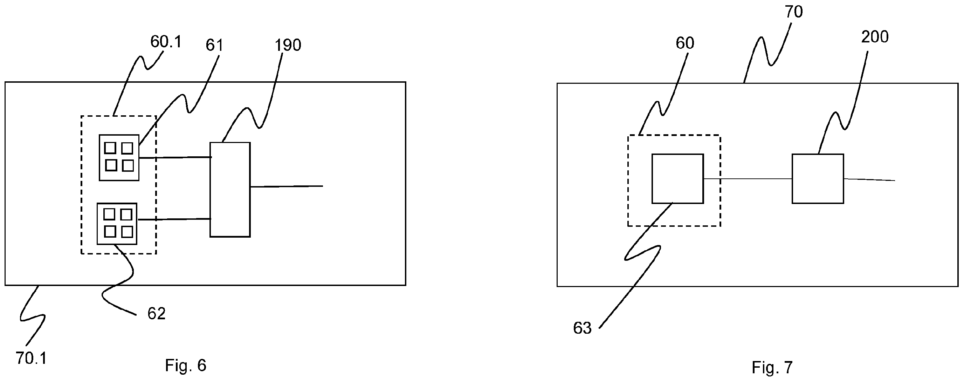

Gemäß einer vorteilhaften Ausgestaltung kann die Antenneneinrichtung der Kommunikationseinrichtung 60 eine gemeinsame Antenne 63 zum Senden und Empfangen von Funksignalen aufweisen. So zeigt Figur 6 eine beispielhafte Leiterplatte 70 mit der Kommunikationseinrichtung 60, die als Antenneneinrichtung die gemeinsame Antenne 63 aufweist. Die beispielhaft bestückte Leiterplatte 70 ist in der Kopplungseinrichtung 10, welche beispielhaft in Figur 2 und Figur 5a gezeigt ist, eingesetzt. Zur Ansteuerung der einzigen Antenne 63 kann in an sich bekannter Weise eine Hochfrequenzelektronik 200 verwendet werden, die beispielsweise einen Duplexer aufweist, der wechselseitig erlaubt, dass nur Funksignale im ersten Frequenzband von der Antenne 63 abgestrahlt oder Funksignale im zweiten Frequenzband von der Antenne 63 empfangen werden können. In diesem Fall können für die zu sendenden Funksignale und die empfangenen Funksignale das erste Frequenzband und das zweite Frequenzband gleich sein. Anstelle eines Duplexers kann auch ein an sich bekannter Diplexer verwendet werden.

Anstelle der einzigen Sende- und Empfangsantenne 63 kann auch Kommunikationseinrichtung 60.1 verwendet werden, die eine Sendeantenne 61 und eine räumlich davon getrennte Empfangsantenne 62 aufweist, wie dies in Figur 6 dargestellt ist. Die Kommunikationseinrichtung 60.1 kann wiederum auf einer Leiterplatte 70.1 montiert sein. Die beiden Antennen 61 und 62 können in an sich bekannter Weise von einer Hochfrequenzelektronik 190 gesteuert werden. Sowohl die in Figur 7 gezeigte Sende- und Empfangsantenne 63 als auch die in Figur 6 gezeigten Sendeantenne 61 und Empfangsantenne 62 können insbesondere über die Hochfrequenzelektronik 200 bzw. 190 mit der Kommunikationsschnittstelle 41 verbunden sein, wie dies in Figur 5a zu sehen ist. Angemerkt sei, dass die Kommunikationsschnittstelle 41 als optische oder als elektrische Kommunikationsschnittstelle ausgebildet sein kann. Vorteilhafterweise kann die Kommunikationsschnittstelle 41 als eine Ethernet-basierte Kommunikationsschnittstelle, welche ein Ethernet-Protokoll unterstützt, ausgebildet sein. Angemerkt sei an dieser Stelle, dass die Hochfrequenzelektronik 200 auch Bestandteil der Kommunikationseinrichtung 60 sein kann, während die Hochfrequenzelektronik 190 auch Bestandteil der Kommunikationseinrichtung 60.1 sein kann. Es versteht sich, dass die Hochfrequenzelektronik 190 auf der gleichen Seite der Leiterplatte wie die Antennen 61 und 62 oder aber auch an der Rückseite der Leiterplatte 70 angeordnet sein kann. Ferner ist denkbar, in dem Gehäuse 20, 30 weitere Leiterplatten vorzusehen, auf denen eine für den Betrieb der Kopplungseinrichtung 10 erforderliche Elektronik und/oder Elektrik montiert ist. In an sich bekannter Weise kann die Hochfrequenzelektronik 190 bzw. 200 jeweils einen Modulator zum Modulieren der elektromagnetischen Wellen mit zu übertragenden Daten und einen Demodulator zum Demodulieren empfangener elektromagnetischer Signale aufweisen.

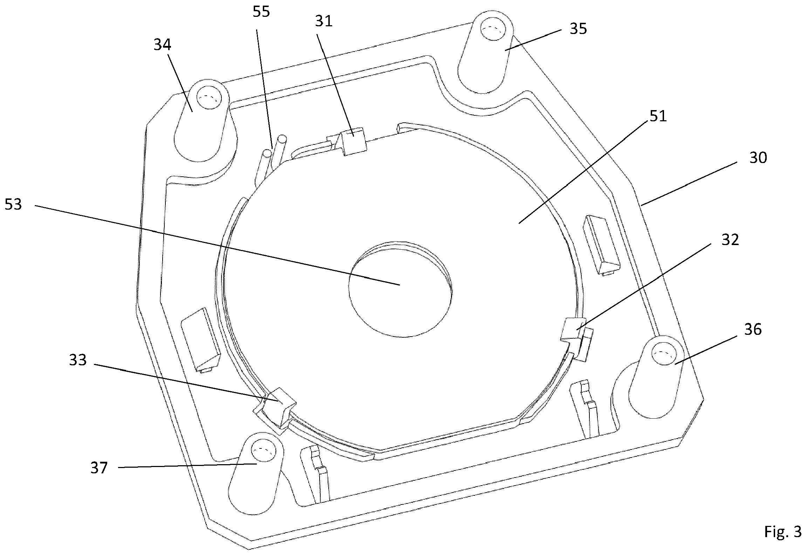

Angemerkt sei an dieser Stelle, dass die insbesondere in Figur 3 zu sehenden Anschlüsse 55 der Luftspule 52 unmittelbar oder über entsprechende Spannungswandler (nicht dargestellt) mit dem Energieversorgungsanschluss 40 verbunden sein können, wie dies in Figur 5a schemenhaft dargestellt ist.

Um eine effiziente und platzsparende Bauweise zu ermöglichen, können die beiden Antennen 61 und 62 jeweils als Patchantenne ausgebildet und auf der Leiterplatte 70.1 angeordnet sein. In ähnlicher Weise kann die Sende-und Empfangsantenne 63 gemäß Figur 7 als Patchantenne ausgebildet und auf der Leiterplatte 70 angeordnet sein.

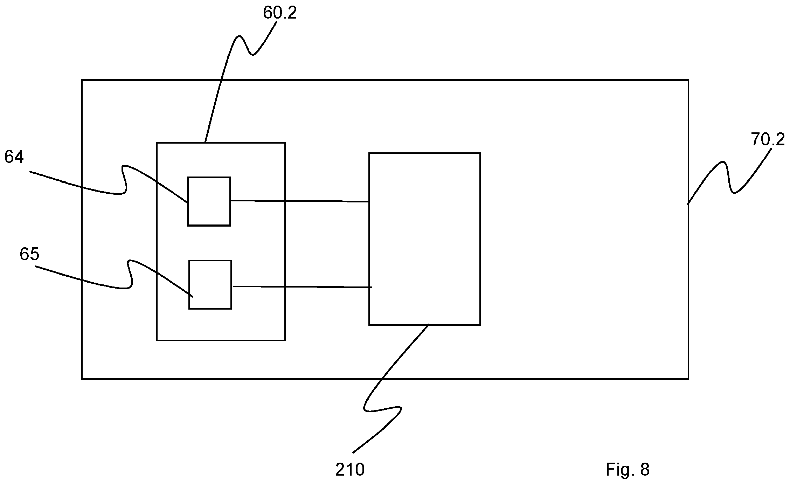

Anstelle der Sende- und Empfangsantenne 63 gemäß Figur 7 oder der Sendeantenne 61 und Empfangsantenne 62 gemäß Figur 6 kann eine Kommunikationseinrichtung 60.2 vorgesehen sein, die einen optischen Sender 64 und gegebenenfalls einen davon räumlich getrennt angeordneten optischen Empfänger 65 aufweisen kann, wie dies in Figur 8 schematisch dargestellt ist. Der optischer Sende 64 und der optische Empfänger 65 können wiederum auf einer Leiterplatte 70.2 montiert sein, wobei die Leiterplatte 70.2 wiederum anstelle der Leiterplatte 70 oder der Leiterplatte 70.1 in der in Figur 2 gezeigten Kopplungseinrichtung 10 eingesetzt werden kann. Als optischer Sender 64 kann in an sich bekannter Weise eine LED oder eine Laserdiode verwendet werden, während der optische Empfänger 65 beispielsweise als Fototransistor realisiert sein kann. Wiederum kann auf der Leiterplatte 70.2 eine entsprechende Steuerelektronik 210 vorgesehen sein, die den optischen Sender 64 und den optischen Empfänger 65 zum Senden und Empfangen von optischen Signalen ansteuern kann. Optische Empfangssignale und optische Sendesignale können sich beispielsweise in der Wellenlänge unterscheiden. Der optische Sender 64 ist dazu ausgebildet, optische Signale in einer Hauptabstrahlrichtung durch die Durchgangsöffnung 53 des Ferritkörpers 51 und die durch die Luftspule 52 gebildete Öffnung 54 abzustrahlen, die parallel zu der in Figur 5a gezeigten y-Achse verläuft. Die von einer komplementären Kopplungseinrichtung vom optischen Empfänger 65 empfangenen optischen Signale weisen eine Hauptstrahlrichtung durch die Durchgangsöffnung 53 des Ferritkörpers 51 und durch die Öffnung 54 der Luftspule 52 auf, die im Wesentlichen parallel zur Hauptabstrahlrichtung des optischen Senders 64 verläuft.

In Figur 5b ist eine alternative Kopplungseinrichtung 110 zur drahtlosen Daten- und Energieübertragung dargestellt. Im Wesentlichen unterscheidet sich die Kopplungseinrichtung 110 von der Kopplungseinrichtung 10 dadurch, dass eine Kommunikationseinrichtung 160, die zum Abstrahlen von elektromagnetischen Signalen in einer Hauptabstrahlrichtung 180 ausgebildet ist, zumindest teilweise innerhalb einer Durchgangsöffnung 153 eines Ferritkörpers 151 angeordnet ist. Die Kommunikationseinrichtung 160 kann ähnlich der Kommunikationseinrichtung 60 auf einer Leiterplatte 160 angeordnet sein. Die Ausführungen zur Kopplungseinrichtung 10 beschreiben somit im Wesentlichen auch Kopplungseinrichtung 110. Am Ferritkörper 151 kann wenigstens eine Luftspule 152, die eine Öffnung 154 definiert, angeordnet sein kann. Die Luftspule 152 und der Ferritkörper 151 bilden eine Energieübertragungseinrichtung 150, die im Wesentlichen wie die Energieübertragungseinrichtung 50 aufgebaut sein kann. Insoweit wird auf die Erläuterung der Energieversorgungseinrichtung 50 und auf die Figuren 3 und 4 verweisen. Ähnlich der Kopplungseinrichtung 10 weist die Kopplungseinrichtung 110 vorzugsweise einen Energieversorgungsanschluss 140 und eine Kommunikationsschnittstelle 141 auf.

In Figur 5c ist die in Figur 5b gezeigte Kopplungseinrichtung 110 dargestellt, bei der die Kommunikationseinrichtung 160 nunmehr vollständig in der Durchgangsöffnung 153 des Ferritkörpers 151 und in der Öffnung 154 der Luftspule 152 angeordnet ist.

Gemäß einer beispielhaften Ausgestaltung, die in Figur 3 dargestellt ist, ist der Ferritkörper 53 scheibenförmig ausgebildet, wobei auch die Luftspule 52 den gleichen Querschnitt aufweisen kann. In diesem Fall verläuft die Hauptabstrahlrichtung der Kommunikationseinrichtung 60, 60.1 oder 60.2 im Wesentlichen parallel zur Rotationsachse des Ferritkörpers 51 und der Luftspule 52. Über Rastnasen 31 bis 33 kann der Ferritkörper 51 und somit die Luftspule 52 am Deckel 30 lösbar montiert werden. In ähnlicher Weise kann auch der Ferritkörper 151 und somit die Luftspule 152 am Deckel 30 lösbar montiert werden.

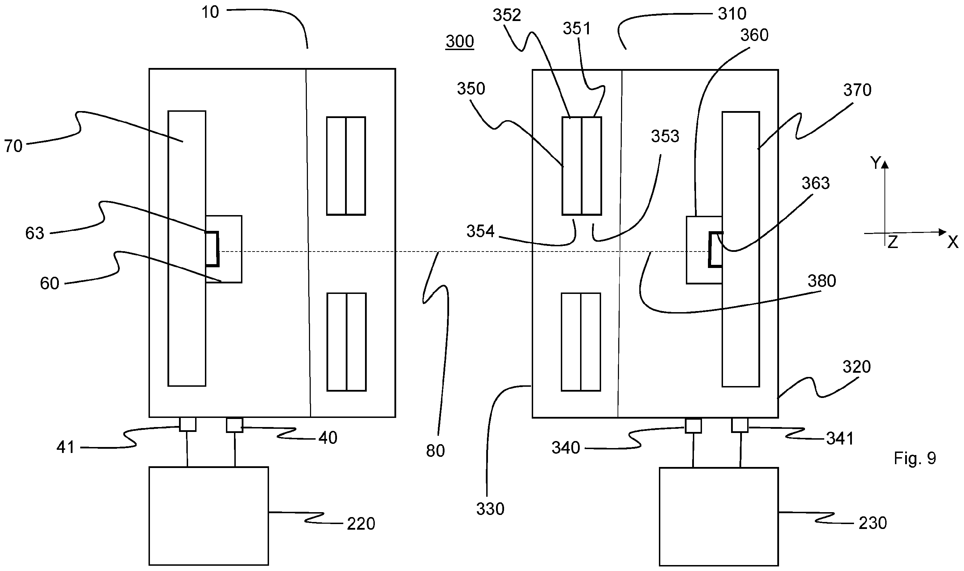

Um beispielsweise zwischen einem ersten elektrischen und/oder elektronischen Gerät 220 und einem zweiten elektrischen und/oder elektronischen Gerät 230 drahtlos Daten und Energie übertragen zu können, ist ein beispielhaftes Kopplungssystem 300 vorgesehen, welches beispielhaft in Figur 9 dargestellt ist. Das Kopplungssystem 300 weist eine erste Kopplungseinrichtung, die im vorliegenden Beispiel die in Figur 2, Figur 5a und Figur 7 dargestellte Kopplungseinrichtung 10 ist, und eine zweite komplementäre Kopplungseinrichtung 310 auf.

Wie in Figur 9 dargestellt, ist die Kopplungseinrichtung 10 über den Energieversorgungsanschluss 40 und die Kommunikationsschnittstelle 41 mit dem elektronischen und/oder elektrischen Gerät 220 verbunden. Im vorliegenden Beispiel sei angenommen, dass das elektrische und/oder elektronischen Gerät 220 eine Datenquelle aufweist, die Daten zur drahtlosen Übertragung an das elektrische und/oder elektronische Gerät 230 erzeugt und über ein elektrisches oder optischen Übertragungsmedium der Kommunikationsschnittstelle 41 zuführen kann. Weiterhin verfügt beispielhaft das elektrische und/oder elektronische Gerät 220 über eine Energieversorgungseinrichtung, die zum Beispiel über eine elektrische Leitung Energie zum Energieversorgungsanschluss 40 überträgt, die dann drahtlos über die Energieübertragungseinrichtung 50 und die komplementäre Kopplungseinrichtung 310 zum elektrischen und/oder elektronischen Gerät 230 übertragen werden kann. Angemerkt sei an dieser Stelle, dass sowohl die Kopplungseinrichtung 10 als auch die komplementäre Kopplungseinrichtung 310 dazu ausgebildet sind, die vom elektrischen und/oder elektronischen Gerät 220 gelieferte Energie so aufzubereiten, dass die Bauteile der Kopplungseinrichtung 10 sowie die Bauteile der Kopplungseinrichtung 310 mit geeigneter Energie versorgt werden können.

Der Begriff "komplementär" bedeutet insbesondere, dass zumindest eine Kommunikationseinrichtung 360 der Kopplungseinrichtung 310 komplementär zur Kommunikationseinrichtung 60 der Kopplungseinrichtung 10 ausgebildet ist. Bei dem in Fig. 9 gezeigten Ausführungsbeispiel heißt das, dass sowohl die Kommunikationseinrichtung die in Fig. 6 gezeigte einzige Sende- und Empfangsantenne 63 als auch die Kommunikationseinrichtung 310 eine einzige Sende-und Empfangsantenne 363 aufweist, die im gekoppelten Zustand fluchtend zueinander angeordnet sind. In diesem Beispiel fallen die Hauptabstrahleinrichtung und Hauptempfangsstrahlrichtung, die parallel zur x-Achse verlaufen, bezüglich der Kommunikationseinrichtung 60 zusammen.

Ist in der Kopplungseinrichtung 10 jedoch die in Fig. 7 gezeigte Kommunikationseinrichtung 60.1 umfassend die Sendeantenne 61 und die Empfangsantenne 62 implementiert, so enthält auch die Kommunikationseinrichtung 360 eine Sendeantenne und davon räumlich getrennte Empfangsantenne. Im gekoppelten Zustand ist die Sendeantenne 61 fluchtend zur Empfangsantenne der Kommunikationseinrichtung 360 angeordnet, während die Empfangsantenne 62 fluchtend zur Sendeantenne der Kommunikationseinrichtung 360 angeordnet ist. Auf diese Weise ist eine bidirektionale Datenübertragung zwischen dem Gerät 220 und dem Gerät 230 möglich. Angemerkt sei noch, dass die Hauptabstrahlrichtung der Sendeantenne 61 und, sofern vorhanden, der der Sendeantenne der Kommunikationseinrichtung 360 parallel zueinander und parallel zur x-Achse des in Fig. 9 gezeigten Koordinatensystems verlaufen. Eine ähnliche komplementäre Ausbildung der Kopplungseinrichtung 360 ergibt sich, wenn die Kommunikationseinrichtung 60.2 umfassend den optische Sender 64 und den optischen Empfänger 65 in der Kopplungseinrichtung 10 implementiert ist.

Die Sende- und Empfangsantenne 363 der Kommunikationseinrichtung 360 kann auf einer Leiterplatte 370 angeordnet sein. Im Übrigen ist die Kopplungseinrichtung 310 vorzugsweise ähnlich der Kopplungseinrichtung 10 aufgebaut. Mit anderen Worten: die Kopplungseinrichtung 310 weist ein Gehäuse 320, 330 auf, welche einen Deckel 330 und ein Basisteil 320 aufweisen kann. Im dem Gehäuse 320, 330 ist die Kommunikationseinrichtung 360 zur drahtlosen Datenübertragung angeordnet, wobei die Kommunikationseinrichtung 360 zum Empfangen von elektromagnetischen Signalen in einer Hauptempfangsrichtung ausgebildet ist. Im gekoppelten Zustand liegen die Hauptabstrahlrichtung der Sende- und Empfangsantenne 63 der Kopplungseinrichtung 10 und die Hauptempfangsrichtung Sende- und Empfangsantenne 363 Kopplungseinrichtung 310 auf einer gemeinsamen Linie 380, die parallel zu der x-Achse des in Figur 9 gezeigten Koordinatensystems. Ähnlich der Kopplungseinrichtung 10 ist die eine Luftspule 352 und ein Ferritkörper 351 aufweisende Energieübertragungseinrichtung 350 im Gehäuse, vorzugsweise am Deckel 330 des Gehäuses der Kopplungseinrichtung 310, lösbar gelagert. Die Energieübertragungseinrichtung 350 kann ähnlich der in Figur 4 gezeigten Energieübertragungseinrichtung 50 der Kopplungseinrichtung 10 ausgebildet sein. Von daher erübrigt sich eine detailliertere Erläuterung. Die Luftspule 352, der Ferritkörper 351 sowie die Kommunikationseinrichtung 360 sind derart zueinander angeordnet, dass die von der Sende- und Empfangsantenne 63 der Kopplungseinrichtung 10 ausgesendeten elektromagnetischen Funksignale sich in der Hauptempfangsrichtung, die auf der Linie 380 liegt, durch die Öffnung 354 der Luftspule 352 und durch die Durchgangsöffnung 353 des Ferritkörpers 351 zur Kommunikationseinrichtung 360 bzw. zur Sende- und Empfangsantenne 363 hin ausbreiten. Wie in Figur 9 zu sehen, sind im gekoppelten Zustand die Durchgangsöffnung 53 des Ferritkörpers 51, die Öffnung 54 der Luftspule 52 der ersten Kopplungseinrichtung 10 zueinander fluchtend zur Durchgangsöffnung 353 des Ferritkörpers 351 und der Öffnung 354 der Luftspule 352 der zweiten Kopplungseinrichtung 310 angeordnet, so dass die von der Sende- und Empfangsantenne 63 der Kommunikationseinrichtung 60 abgestrahlten elektromagnetischen Signale von der Sende- und Empfangsantenne 363 der Kommunikationseinrichtung 360 empfangen werden können. Die Hauptabstrahlrichtung und Hauptempfangsrichtung verlaufen beispielsweise durch das Zentrum der Durchgangsöffnungen 53 und 353 und der Öffnungen 54 und 354. In dem in Figur 9 dargestellten Ausführungsbeispiel fungiert die Luftspule 52 der ersten Kopplungseinrichtung 10 als Primärspule und die wenigstens eine Luftspule 352 der zweiten Kopplungseinrichtung 310 als Sekundärspule für eine drahtlose Energieübertragung. Wie in Figur 9 gezeigt, besteht im gekoppelten Zustand zwischen der Kopplungseinrichtung 10 und der Kopplungseinrichtung 310 ein geringer Abstand, der beispielsweise zwischen 0 und 10 cm liegen kann. Denkbar ist natürlich auch, dass im gekoppelten Zustand sich die beiden Kopplungseinrichtungen 10 und 310 berühren. In dem dargestellten Ausführungsbeispiel gemäß Figur 9 fungieren die Deckel 330 und 30 jeweils als Kopplungsflächen des Kopplungssystems 300.

Um eine bidirektionale Datenkommunikation zu ermöglichen, können Daten vom Gerät 230 über die Sende- und Empfangsantenne 363 der Kopplungseinrichtung 310 zur Sende- und Empfangsantenne 63 der Kopplungseinrichtung 10 und von dort zum Gerät 220 übertragen werden.

Nachfolgend werden zumindest einige der obigen beispielhaften Aspekte noch einmal zusammengefasst.

Es wird eine Kopplungseinrichtung 10 zur drahtlosen Daten- und Energieübertragung geschaffen, die beispielhaft in Fig. 2 und Fig. 5a in Verbindung mit den Figuren 3 und 4 gezeigt ist. Sie weist beispielsweise folgende Merkmale auf:
ein Gehäuse 20, 30,
eine im Gehäuse 20, 30 angeordnete Kommunikationseinrichtung 60 zur drahtlosen Datenübertragung, wobei die Kommunikationseinrichtung 60 zum Abstrahlen von elektromagnetischen Signalen in einer Hauptabstrahlrichtung, die zum Beispiel parallel zur in Fig. 5a gezeigten y-Achse verläuft, ausgebildet ist, und
eine im Gehäuse 20, 30 angeordnete drahtlose Energieübertragungseinrichtung 50, die einen Ferritkörper 51 mit einer Durchgangsöffnung 53 sowie wenigstens eine, eine Öffnung 54 definierende Luftspule 52, die am Ferritkörper 51 angeordnet ist, aufweist, wobei die Luftspule 52, der Ferritkörper 51 und die Kommunikationseinrichtung 60 derart zueinander angeordnet sind, dass von der Kommunikationseinrichtung 60 in der Hauptabstrahlrichtung abgestrahlte elektromagnetische Signale sich durch die Durchgangsöffnung 53 des Ferritkörpers 51 und durch die Öffnung 54 der wenigstens einen Luftspule 52 ausbreiten.

Die Energieübertragungseinrichtung 50 und die Kommunikationseinrichtung 60 können bezüglich der Hauptabstrahlrichtung beispielsweise hintereinander angeordnet sein.

Vorteilhafterweise kann die Kommunikationseinrichtung 60 eine Antenneneinrichtung 61, 62 bzw. 63 aufweisen, die zum Abstrahlen von Funksignalen in einem ersten Frequenzband und zum gleichzeitigen Empfangen von Funksignalen in einem zweiten Frequenzband ausgebildet sein kann, wobei das erste und zweite Frequenzband jeweils ein ISM Band im GHz-Bereich sein kann und vorteilhafterweise jeweils innerhalb eines Frequenzbereichs von 57 bis 66 GHz oder in einem höheren Frequenzbereich liegen kann.

Eine alternative Kopplungseinrichtung 110 zur drahtlosen Daten- und Energieübertragung ist in den Figuren 5b und 5c gezeigt. Sie weist beispielsweise folgende Merkmale auf:
ein Gehäuse 120, 130,
eine im Gehäuse 120, 130 angeordnete Kommunikationseinrichtung 160 zur drahtlosen Datenübertragung, wobei die Kommunikationseinrichtung 160 zum Abstrahlen von elektromagnetischen Signalen in einer Hauptabstrahlrichtung ausgebildet ist,
eine im Gehäuse 120, 130 angeordnete drahtlose Energieübertragungseinrichtung 150, die einen Ferritkörper 151 mit einer Durchgangsöffnung 153 sowie wenigstens eine, eine Öffnung 154 definierende Luftspule 152, die am Ferritkörper 151 angeordnet ist, aufweist, wobei die Durchgangsöffnung 153 des Ferritkörpers 151 und die Öffnung 154 der Luftspule 152 zueinander fluchten, und wobei die Kommunikationseinrichtung 160 zumindest teilweise innerhalb der Durchgangsöffnung 153 des Ferritkörpers 151 angeordnet ist.

Vorteilhafterweise kann die Kommunikationseinrichtung 160 eine Antenneneinrichtung, die der Antenneneinrichtung 61, 62 bzw. 63 entsprechen kann, aufweisen. Die Antenneneinrichtung kann zum Abstrahlen von Funksignalen in einem ersten Frequenzband und zum gleichzeitigen Empfangen von Funksignalen in einem zweiten Frequenzband ausgebildet sein, wobei das erste und zweite Frequenzband jeweils ein ISM Band im GHz-Bereich sein kann und vorteilhafterweise jeweils innerhalb eines Frequenzbereichs von 57 bis 66 GHz oder in einem höheren Frequenzbereich liegen kann.

Vorteilhafterweise sind die Luftspule 152, der Ferritkörper 151 und die Kommunikationseinrichtung 160 derart zueinander angeordnet sind, dass von der Kommunikationseinrichtung 160 in der Hauptabstrahlrichtung abgestrahlte elektromagnetische Signale sich durch die Durchgangsöffnung 153 des Ferritkörpers 151 und durch die Öffnung 154 der wenigstens einen Luftspule 152 ausbreiten können.

Vorzugsweise wiest die Kopplungseinrichtung 10 bzw. 110 einen, mit der wenigstens einen Luftspule 52; 152 elektrisch verbundenen Energieversorgungsanschluss 40; 140, an den eine externe Energieversorgungseinrichtung anschließbar ist, und eine mit der Kommunikationseirichtung 60; 160 elektrisch oder optisch verbundene Kommunikationsschnittstelle 41; 141, an die eine externe Nachrichtenquelle 220 anschließbar ist auf.

Das Gehäuse 20, 30; 120, 130 kann vorzugsweise einen Deckel 30; 130 und ein Basisteil 20; 120 aufweisen, welches durch den Deckel 30; 130 abdeckbar ist, wobei die Energieübertragungseinrichtung 50; 150 am Deckel 30; 130 montierbar ist.

Der Deckel 30, 130 kann vorzugsweise einen für elektromagnetische Wellen durchlässigen Bereich aufweisen, wobei die Hauptabstrahlrichtung orthogonal zu dem für elektromagnetische Wellen durchlässigen Bereich verläuft.

Vorzugsweise ist der Deckel 30, 130 aus einem Kunststoffmaterial hergestellt.

Das Basisteil 20 kann eine Grundwandung 22 aufweisen, zu der parallel eine Leiterplatte 70, 70.1, 70.2, an der die Kommunikationseinrichtung 60, 60.1, 60.2 montierbar ist, angeordnet sein, wobei im montierten Zustand die Leiterplatte 70, 70.1, 70.2, die wenigstens eine Luftspule 52 und der Ferritkörper 51 jeweils in einer Ebene liegen, die zueinander parallel angeordnet sind, wobei die Hauptabstrahlrichtung senkrecht zu diesen Ebenen verläuft.

Vorzugsweise weist die Kommunikationseinrichtung 60, 60.1 eine Antenneneinrichtung aufweist, die zum Abstrahlen von Funksignalen in der Hauptabstrahlrichtung ausgebildet ist, wobei die abgestrahlten Funksignale in einem ersten Frequenzband liegen.

Das erste Frequenzband kann ein ISM Band im GHz-Bereich sein, welches vorzugsweise innerhalb eines Frequenzbereich von 57 bis 66 GHz liegt.

Die Antenneneinrichtung kann zum Empfangen von Funksignalen in einem zweiten Frequenzband ausgebildet sein, wobei die empfangenen Funksignale eine Hauptempfangsrichtung aufweisen, die sich parallel zur Hauptabstrahlrichtung durch die Durchgangsöffnung 53 des Ferritkörpers 51 und die Öffnung 54 der wenigstens einen Luftspule 52 erstreckt, wobei, je nach Implementierung, das erste Frequenzband und das zweite Frequenzband unterschiedlich oder gleich sein können.

Das zweite Frequenzband kann ein ISM Band im GHz-Bereich sein und vorzugsweise innerhalb eines Frequenzbereich von 57 bis 66 GHz liegt.

Gemäß einer vorteilhaften Ausgestaltung kann die Antenneneinrichtung 60 und auch die Antenneneinrichtung der Kopplungseinrichtung 110 jeweils eine gemeinsame Antenne 63 zum Senden und Empfangen von Funksignalen aufweisen, wobei die empfangenen Funksignale eine Hauptempfangsrichtung aufweisen, die vorzugsweise mit der Hauptabstrahleinrichtung zusammenfallen kann. Alternativ kann die Antenneneinrichtung 60 und auch die Antenneneinrichtung der Kopplungseinrichtung 110 eine Sendeantenne 61 und eine dazu separate Empfangsantenne 62 aufweisen, wobei die empfangenen Funksignale eine Hauptempfangsrichtung aufweisen, die sich vorzugsweise zumindest teilweise parallel zur Hauptabstrahlrichtung durch die Durchgangsöffnung 53 des Ferritkörpers 51 und die Öffnung 54 der wenigstens einen Luftspule 52 erstreckt.

Sowohl die gemeinsame Antenne 63 zum Senden-und Empfangen als auch die Sendeantenne 61 und die dazu separate Empfangsantenne 62 können jeweils als Patchantenne ausgebildet sein.

Alternativ kann die Kommunikationseinrichtung 60.2 einen optischen Sender 64 zum Abstrahlen von optischen Signalen in der Hauptabstrahlrichtung und gegebenenfalls einen optischen Empfänger 65 zum Empfangen von optischen Signalen aufweisen, wobei die empfangenen optischen Signale eine Hauptstrahlrichtung aufweisen, die sich parallel zur Hauptabstrahlrichtung durch die Durchgangsöffnung 53 des Ferritkörpers 51 und die Öffnung 54 der wenigstens einen Luftspule 52 erstreckt.

Vorzugsweise ist der Kommunikationseinrichtung 60, 60.1, 60.2 eine Steuereinrichtung 200, 190, 210 zugeordnet.

Gemäß einem weiteren vorteilhaften Aspekt, ist ein in Fig. 9 beispielhaft gezeigtes Kopplungssystem 300 zur drahtlosen Daten- und Energieübertragung vorgesehen, welches folgende beispielhafte Merkmale aufweisen kann:
eine erste, wie zuvor beschriebene Kopplungseinrichtung 10, 110, wobei die erste Kopplungseinrichtung 10 mit einem ersten elektronischen und/oder elektrischen Gerät 220 verbindbar ist, und
eine zweite, komplementäre Kopplungseinrichtung 310, welche mit einem zweiten elektrischen und/oder elektronischen Gerät 230 verbindbar ist und folgende Merkmale aufweisen kann:
   ein Gehäuse 320, 330 ,
   eine im Gehäuse 320, 330 angeordnete Kommunikationseinrichtung 360 zur drahtlosen Datenübertragung, wobei die Kommunikationseinrichtung 360 komplementär zur Kommunikationseinrichtung 60 zum Empfangen von elektromagnetischen Signalen in einer Hauptempfangsrichtung ausgebildet sein kann, und
   eine im Gehäuse 320, 330 angeordnete drahtlose Energieübertragungseinrichtung, die einen Ferritkörper 351 mit einer Durchgangsöffnung 353 und wenigstens eine, eine Öffnung 354 definierende Luftspule 352, die am Ferritkörper 351 angeordnet ist, aufweist, wobei die Luftspule 352, der Ferritkörper 351 und die Kommunikationseinrichtung 360 derart zueinander angeordnet sind, dass empfangene elektromagnetische Signale sich in der Hauptempfangsrichtung durch die Durchgangsöffnung 353 des Ferritkörpers 351 und durch die Öffnung 354 der wenigstens einen Luftspule 352 zur Kommunikationseinrichtung 360 hin ausbreiten, wobei im gekoppelten Zustand die Durchgangsöffnung 353 des Ferritkörpers 351 der ersten Kopplungseinrichtung 10, 110 fluchtend zur Durchgangsöffnung 353 des Ferritkörpers 351 der zweiten Kopplungseinrichtung angeordnet ist, so dass die von der Kommunikationseinrichtung 60 der ersten Kopplungseinrichtung 10 abgestrahlten elektromagnetischen Signale von der Kommunikationseinrichtung 360 der zweiten Kopplungseinrichtung 310 empfangen werden, und wobei die wenigstens eine Luftspule 52 der ersten Kopplungseinrichtung 10 als Primärspule und die wenigstens eine Luftspule 352 der zweiten Kopplungseinrichtung 310 als Sekundärspule fungiert.

## Patentansprüche

1. Kopplungseinrichtung (10) zur drahtlosen Daten- und Energieübertragung, aufweisend
ein Gehäuse (20, 30),
eine im Gehäuse (20, 30) angeordnete Kommunikationseinrichtung (60) zur drahtlosen Datenübertragung, wobei die Kommunikationseinrichtung (60) zum Abstrahlen von elektromagnetischen Signalen in einer Hauptabstrahlrichtung ausgebildet ist, und
eine im Gehäuse (20, 30) angeordnete drahtlose Energieübertragungseinrichtung (50) , die einen Ferritkörper (51) mit einer Durchgangsöffnung (53) sowie wenigstens eine, eine Öffnung (54) definierende Luftspule (52), die am Ferritkörper (51) angeordnet ist, aufweist, wobei die Luftspule (52), der Ferritkörper (51) und die Kommunikationseinrichtung (60) derart zueinander angeordnet sind, dass von der Kommunikationseinrichtung (60) in der Hauptabstrahlrichtung abgestrahlte elektromagnetische Signale sich durch die Durchgangsöffnung (53) des Ferritkörpers (51) und durch die Öffnung (54) der wenigstens einen Luftspule (52) ausbreiten, **dadurch gekennzeichnet, dass**
die Kommunikationseinrichtung (60, 60.1) eine Antenneneinrichtung aufweist, die zum Abstrahlen von Funksignalen in der Hauptabstrahlrichtung ausgebildet ist, wobei die abgestrahlten Funksignale in einem ersten Frequenzband liegen, und wobei das erste Frequenzband ein ISM Band im GHz-Bereich ist und innerhalb eines Frequenzbereich von 57 GHz bis 66 GHz oder in einem höheren Frequenzbereich liegt.

2. Kopplungseinrichtung (10) nach Anspruch 1,
wobei
die Energieübertragungseinrichtung (50) und die Kommunikationseinrichtung (60) bezüglich der Hauptabstrahlrichtung hintereinander angeordnet ist

3. Kopplungseinrichtung (110) zur drahtlosen Daten- und Energieübertragung, aufweisend
ein Gehäuse (120, 130),
eine im Gehäuse (120, 130) angeordnete Kommunikationseinrichtung (160) zur drahtlosen Datenübertragung, wobei die Kommunikationseinrichtung (160) zum Abstrahlen von elektromagnetischen Signalen in einer Hauptabstrahlrichtung ausgebildet ist,
eine im Gehäuse (120, 130) angeordnete drahtlose Energieübertragungseinrichtung (150), die einen Ferritkörper (151) mit einer Durchgangsöffnung (153) sowie wenigstens eine, eine Öffnung (154) definierende Luftspule (152), die am Ferritkörper (151) angeordnet ist, aufweist, wobei die Durchgangsöffnung (153) des Ferritkörpers (151) und die Öffnung (154) der Luftspule (152) zueinander fluchten, und wobei die Kommunikationseinrichtung (160) zumindest teilweise innerhalb der Durchgangsöffnung (153) des Ferritkörpers (151) angeordnet ist; **dadurch gekennzeichnet, dass**
die Kommunikationseinrichtung (160) eine Antenneneinrichtung aufweist, die zum Abstrahlen von Funksignalen in der Hauptabstrahlrichtung ausgebildet ist, wobei die abgestrahlten Funksignale in einem ersten Frequenzband liegen, und wobei das erste Frequenzband ein ISM Band im GHz-Bereich ist und innerhalb eines Frequenzbereich von 57 GHz bis 66 GHz oder in einem höheren Frequenzbereich liegt.

4. Kopplungseinrichtung (10, 110) nach einem der vorstehenden Ansprüche, mit einem, mit der wenigstens einen Luftspule (52, 152) elektrisch verbundenen Energieversorgungsanschluss (40, 140), an den eine externe Energieversorgungseinrichtung anschließbar ist, und einer mit der Kommunikationseinrichtung (60, 160) elektrisch oder optisch verbundenen Kommunikationsschnittstelle (41, 141), an die eine externe Nachrichtenquelle (220) anschließbar ist.

5. Kopplungseinrichtung nach einem der vorstehenden Ansprüche,
wobei
das Gehäuse (20, 30; 120, 130) einen Deckel (30, 130) und ein Basisteil (20, 120), welches durch den Deckel (30, 130) abdeckbar ist, aufweist, und die Energieübertragungseinrichtung (50, 150) am Deckel (30, 130) montierbar ist.

6. Kopplungseinrichtung nach Anspruch 5,
wobei
der Deckel (30, 130) einen für elektromagnetische Wellen durchlässigen Bereich aufweist, wobei die Hauptabstrahlrichtung orthogonal zu dem für elektromagnetische Wellen durchlässigen Bereich verläuft.

7. Kopplungseinrichtung nach Anspruch 5 oder 6,
wobei
der Deckel (30, 130) aus einem Kunststoffmaterial hergestellt ist.

8. Kopplungseinrichtung nach einem der Ansprüche 5 bis 7,
wobei
das Basisteil (20) eine Grundwandung (22) aufweist, zu der parallel eine Leiterplatte (70, 70.1, 70.2), an der die Kommunikationseinrichtung (60, 60.1, 60.2) montierbar ist, angeordnet ist, wobei im montierten Zustand die Leiterplatte (70, 70.1, 70.2), die wenigstens eine Luftspule (52) und der Ferritkörper (51) jeweils in einer Ebene liegen, die zueinander parallel angeordnet sind, wobei die Hauptabstrahlrichtung senkrecht zu diesen Ebenen verläuft.

9. Kopplungseinrichtung nach einem der vorstehenden Ansprüche,
wobei
die Antenneneinrichtung zum Empfangen von Funksignalen in einem zweiten Frequenzband ausgebildet ist, wobei die empfangenen Funksignale eine Hauptempfangsrichtung aufweisen, die sich parallel zur Hauptabstrahlrichtung durch die Durchgangsöffnung (53) des Ferritkörpers (51) und die Öffnung (54) der wenigstens einen Luftspule (52) erstreckt, wobei das erste Frequenzband und das zweite Frequenzband unterschiedlich oder gleich sind.

10. Kopplungseinrichtung nach Anspruch 9,
wobei
das zweite Frequenzband ein ISM Band im GHz-Bereich ist.

11. Kopplungseinrichtung nach Anspruch 10,
wobei
das zweite Frequenzband innerhalb eines Frequenzbereich von 57 bis 66 GHz oder in einem höheren Frequenzbereich liegt.

12. Kopplungseinrichtung nach einem der vorstehenden Ansprüche in Verbindung mit Anspruch 9,
wobei
die Antenneneinrichtung eine gemeinsame Antenne (63) zum Senden und Empfangen von Funksignalen oder eine Sendeantenne (61) und eine dazu separate Empfangsantenne (62) aufweist.

13. Kopplungseinrichtung nach Anspruch 12,
wobei
die gemeinsame Antenne (63) zum Senden-und Empfangen oder die Sendeantenne (61) und die dazu separate Empfangsantenne (62) jeweils als Patchantenne ausgebildet ist.

14. Kopplungseinrichtung nach einem der vorstehenden Ansprüche,
wobei
die Kommunikationseinrichtung (60, 60.1, 60.2) eine Steuereinrichtung (200, 190, 210) aufweist.

15. Kopplungssystem (300) zur drahtlosen Daten- und Energieübertragung, aufweisend
eine erste Kopplungseinrichtung (10, 110) ) nach einem der vorstehenden Ansprüche, wobei die erste Kopplungseinrichtung (10) mit einem ersten elektronischen und/oder elektrischen Gerät (220) verbindbar ist, und
eine zweite, komplementäre Kopplungseinrichtung (310), welche mit einem zweiten elektrischen und/oder elektronischen Gerät (230) verbindbar ist und folgende Merkmale aufweist:
ein Gehäuse (320, 330),
eine im Gehäuse (320, 330) angeordnete Kommunikationseinrichtung (360) zur drahtlosen Datenübertragung, wobei die Kommunikationseinrichtung (360) zum Empfangen von elektromagnetischen Signalen in einer Hauptempfangsrichtung ausgebildet ist, und
eine im Gehäuse (320, 330) angeordnete drahtlose Energieübertragungseinrichtung, die einen Ferritkörper (351) mit einer Durchgangsöffnung (353) und wenigstens eine, eine Öffnung (354) definierende Luftspule (352), die am Ferritkörper (351) angeordnet ist, aufweist, wobei die Luftspule (352), der Ferritkörper (351) und die Kommunikationseinrichtung (360) derart zueinander angeordnet sind, dass empfangene elektromagnetische Signale sich in der Hauptempfangsrichtung durch die Durchgangsöffnung (353) des Ferritkörpers (351) und durch die Öffnung (354) der wenigstens einen Luftspule (352) zur Kommunikationseinrichtung (360) hin ausbreiten, wobei im gekoppelten Zustand die Durchgangsöffnung (353) des Ferritkörpers (351) der ersten Kopplungseinrichtung (10, 110) fluchtend zur Durchgangsöffnung (353) des Ferritkörpers (351) der zweiten Kopplungseinrichtung angeordnet ist, so dass die von der Kommunikationseinrichtung (60) der ersten Kopplungseinrichtung (10) abgestrahlten elektromagnetischen Signale von der Kommunikationseinrichtung (360) der zweiten Kopplungseinrichtung (310) empfangen werden, und wobei die wenigstens eine Luftspule (52) der ersten Kopplungseinrichtung (10) als Primärspule und die wenigstens eine Luftspule (352) der zweiten Kopplungseinrichtung (310) als Sekundärspule fungiert.

## Claims

1. Coupling device (10) for wireless data and energy transmission, comprising a housing (20, 30),
a communication device (60) arranged in the housing (20, 30) for wireless data transmission, the communication device (60) being designed to radiate electromagnetic signals in a main radiation direction, and
a wireless energy transmission device (50) arranged in the housing (20, 30), which has a ferrite body (51) with a through-opening (53) and at least one air coil (52) which defines an opening (54) and is arranged on the ferrite body (51), the air coil (52), the ferrite body (51) and the communication device (60) being designed to radiate electromagnetic signals in a main radiation direction,
air coil (52) defining an opening (54), which is arranged on the ferrite body (51), the air coil (52), the ferrite body (51) and the communication device (60) being arranged relative to one another in such a way that electromagnetic signals radiated by the communication device (60) in the main radiation direction propagate through the through-opening (53) of the ferrite body (51) and through the opening (54) of the at least one air coil (52),
**characterized in that**
the communication device (60, 60.1) has an antenna device which is designed to radiate radio signals in the main radiation direction, the radiated radio signals lying in a first frequency band, and the first frequency band being an ISM band in the GHz range and lying within a frequency range from 57 GHz to 66 GHz or in a higher frequency range .

2. Coupling device (10) according to claim 1,
wherein the energy transmission device (50) and the communication device (60) are arranged one behind the other with respect to the main radiation direction

3. Coupling device (110) for wireless data and power transmission, comprising a housing (120, 130),
a communication device (160) arranged in the housing (120, 130) for wireless data transmission, the communication device (160) being designed to radiate electromagnetic signals in a main radiation direction,
a wireless energy transmission device (150) which is arranged in the housing (120, 130) and has a ferrite body (151) with a through-opening (153) and at least one air coil (152) which defines an opening (154) and is arranged on the ferrite body (151), wherein the through-opening (153) of the ferrite body (151) and the opening (154) of the air coil (152) are aligned with one another, and wherein the communication device (160) is arranged at least partially within the through-opening (153) of the ferrite body (151); **characterized in that**
the communication means (160) comprises antenna means adapted to radiate radio signals in the main radiation direction, wherein the radiated radio signals are in a first frequency band, and wherein the first frequency band is an ISM band in the GHz range and is within a frequency range of 57 GHz to 66 GHz or in a higher frequency range .

4. Coupling device (10, 110) according to one of the preceding claims, comprising a power supply connection (40, 140) which is electrically connected to the at least one air coil (52, 152) and to which an external power supply device can be connected, and
a communication interface (41, 141) which is electrically or optically connected to the communication direction (60, 160) and to which an external message source (220) can be connected.

5. Coupling device according to one of the preceding claims, wherein
the housing (20, 30; 120, 130) has a cover (30, 130) and a base part (20, 120), which can be covered by the cover (30, 130), and wherein the energy transmission device (50, 150) can be mounted on the cover (30, 130).

6. Coupling device according to claim 5, wherein
the cover (30, 130) has a region transparent to electromagnetic waves, the main radiation direction being orthogonal to the region transparent to electromagnetic waves.

7. Coupling device according to claim 5 or 6, wherein
the cover (30, 130) is made of a plastic material.

8. Coupling device according to one of claims 5 to 7, wherein
the base part (20) has a base wall (22), parallel to which a printed circuit board (70, 70.1, 70.2), on which the communication device (60, 60.1, 60.2) can be mounted, is arranged, wherein in the mounted state the printed circuit board (70, 70.1, 70.2), the at least one air coil (52) and the ferrite body (51) each lie in a plane which is arranged parallel to one another, wherein the main radiation direction runs perpendicular to these planes.

9. Coupling device according to one of the preceding claims, wherein
the antenna device is designed to receive radio signals in a second frequency band, the received radio signals having a main receiving direction which extends parallel to the main radiation direction through the through-opening (53) of the ferrite body (51) and the opening (54) of the at least one air coil (52), the first frequency band and the second frequency band being different or the same.

10. Coupling device according to claim 9, wherein
the second frequency band is an ISM band in the GHz range.

11. Coupling device according to claim 10, wherein
the second frequency band lies within a frequency range of 57 to 66 GHz or in a higher frequency range.

12. Coupling device according to one of the preceding claims in conjunction with claim 9, wherein
the antenna device has a common antenna (63) for transmitting and receiving radio signals or a transmitting antenna (61) and a separate receiving antenna (62).

13. Coupling device according to claim 12, wherein
the common antenna (63) for transmitting and receiving or the transmitting antenna (61) and the separate receiving antenna (62) are each designed as patch antennas.

14. Coupling device according to one of the preceding claims, wherein
the communication device (60, 60.1, 60.2) has a control device (200, 190, 210).

15. Coupling system (300) for wireless data and energy transmission, comprising a first coupling device (10, 110) according to one of the preceding claims, wherein the first coupling device (10) is connectable to a first electronic and/or electrical device (220), and
a second, complementary coupling device (310), which is connectable to a second electrical and/or electronic device (230) and has the following features:
a housing (320, 330),
a communication device (360) arranged in the housing (320, 330) for wireless data transmission, the communication device (360) being designed to receive electromagnetic signals in a main receiving direction, and
a wireless energy transmission device arranged in the housing (320, 330), which comprises a ferrite body (351) with a through-aperture (353) and at least one air coil (352) defining an opening (354), wherein the air coil (352) is arranged on the ferrite body (351), wherein the air coil (352), the ferrite body (351) and the communication device (360) are arranged relative to one another in such a way that received electromagnetic signals propagate in the main receiving direction through the through-opening (353) of the ferrite body (351) and through the opening (354) of the at least one air coil (352) to the communication device (360), wherein, in the coupled state, the through opening (353) of the ferrite body (351) of the first coupling device (10, 110) is arranged in alignment with the through opening (353) of the ferrite body (351) of the second coupling device, so that the electromagnetic signals emitted by the communication device (60) of the first coupling device (10) are received by the communication device (360) of the second coupling device (310), and wherein the at least one air coil (52) of the first coupling device (10) functions as a primary coil and the at least one air coil (352) of the second coupling device (310) functions as a secondary coil.

## Revendications

1. Dispositif de couplage (10) pour le transfert de données et d'énergie sans fil, présentant
un boîtier (20, 30),
un dispositif de communication (60) disposé dans le boîtier (20, 30) pour le transfert de données sans fil, dans lequel le dispositif de communication (60) est réalisé pour émettre des signaux électromagnétiques dans une direction d'émission principale, et
un dispositif de transfert d'énergie sans fil (50) disposé dans le boîtier (20, 30), qui présente un corps en ferrite (51) avec une ouverture traversante (53) ainsi qu'au moins une bobine à air (52) définissant une ouverture (54), qui est disposée sur le corps en ferrite (51), dans lequel la bobine à air (52), le corps en ferrite (51) et le dispositif de communication (60) sont disposés de telle manière que des signaux électromagnétiques émis par le dispositif de communication (60) dans la direction d'émission principale se propagent à travers l'ouverture traversante (53) du corps en ferrite (51) et à travers l'ouverture (54) de l'au moins une bobine à air (52), **caractérisé en ce que** le dispositif de communication (60, 60.1) présente un dispositif d'antenne, qui est réalisé pour émettre des signaux radio dans la direction d'émission principale, dans lequel les signaux radio émis se situent dans une première bande de fréquences, et dans lequel la première bande de fréquences est une bande ISM dans la plage GHz et se situe dans une plage de fréquences de 57 GHz à 66 GHz ou dans une plage de fréquences plus élevée.

2. Dispositif de couplage (10) selon la revendication 1,
dans lequel
le dispositif de transfert d'énergie (50) et le dispositif de communication (60) sont disposés l'un derrière l'autre par rapport à la direction d'émission principale.

3. Dispositif de couplage (110) pour le transfert de données et d'énergie sans fil, présentant
un boîtier (120, 130),
un dispositif de communication (160) disposé dans le boîtier (120, 130) pour le transfert de données sans fil, dans lequel le dispositif de communication (160) est réalisé pour émettre des signaux électromagnétiques dans une direction d'émission principale,
un dispositif de transfert d'énergie sans fil (150) disposé dans le boîtier (120, 130), qui présente un corps en ferrite (151) avec une ouverture traversante (153) ainsi qu'au moins une bobine à air (152) définissant une ouverture (154), qui est disposée sur le corps en ferrite (151), dans lequel l'ouverture traversante (153) du corps en ferrite (151) et l'ouverture (154) de la bobine à air (152) sont alignées l'une par rapport à l'autre, et dans lequel le dispositif de communication (160) est disposé au moins en partie à l'intérieur de l'ouverture traversante (153) du corps en ferrite (151) ; **caractérisé en ce que**
le dispositif de communication (160) présente un dispositif d'antenne, qui est réalisé pour émettre des signaux radio dans la direction d'émission principale, dans lequel les signaux radio émis se situent dans une première bande de fréquences, et dans lequel la première bande de fréquences est une bande ISM dans la plage GHz et se situe à l'intérieur d'une plage de fréquences de 57 GHz à 66 GHz ou dans une plage de fréquences plus élevée.

4. Dispositif de couplage (10, 110) selon l'une quelconque des revendications précédentes, avec un raccord d'alimentation en énergie (40, 140) relié de manière électrique à l'au moins une bobine à air (52, 152), auquel un dispositif d'alimentation en énergie externe peut être raccordé, et
une interface de communication (41, 141) reliée de manière électrique ou optique au dispositif de communication (60, 160), à laquelle une source de messages externe (220) peut être raccordée.

5. Dispositif de couplage selon l'une quelconque des revendications précédentes,
dans lequel
le boîtier (20, 30 ; 120, 130) présente un couvercle (30, 130) et une partie de base (20, 120), laquelle peut être recouverte par le couvercle (30, 130), et le dispositif de transfert d'énergie (50, 150) peut être monté sur le couvercle (30, 130).

6. Dispositif de couplage selon la revendication 5,
dans lequel
le couvercle (30, 130) présente une zone laissant passer des ondes électromagnétiques, dans lequel la direction d'émission principale s'étend de manière orthogonale par rapport à la zone laissant passer des ondes électromagnétiques.

7. Dispositif de couplage selon la revendication 5 ou 6,
dans lequel
le couvercle (30, 130) est fabriqué à partir d'un matériau en matière plastique.

8. Dispositif de couplage selon l'une quelconque des revendications 5 à 7,
dans lequel
la partie de base (20) présente une paroi principale (22), par rapport à laquelle est disposée de manière parallèle une carte de circuits imprimés (70, 70.1, 70.2), sur laquelle le dispositif de communication (60, 60.1, 60.2) peut être monté, dans lequel la carte de circuits imprimés (70, 70.1, 70.2), l'au moins une bobine à air (52) et le corps en ferrite (51) se situent respectivement dans l'état monté dans un plan, lesquels sont disposés de manière parallèle les uns par rapport aux autres, dans lequel la direction d'émission principale s'étend de manière perpendiculaire par rapport auxdits plans.

9. Dispositif de couplage selon l'une quelconque des revendications précédentes,
dans lequel
le dispositif d'antenne est réalisé pour recevoir des signaux radio dans une deuxième bande de fréquences, dans lequel les signaux radio reçus présentent une direction de réception principale, qui s'étend de manière parallèle par rapport à la direction d'émission principale à travers l'ouverture traversante (53) du corps en ferrite (51) et l'ouverture (54) de l'au moins une bobine à air (52), dans lequel la première bande de fréquences et la deuxième bande de fréquences sont différentes ou identiques.

10. Dispositif de couplage selon la revendication 9,
dans lequel
la deuxième bande de fréquences est une bande ISM dans la plage GHz.

11. Dispositif de couplage selon la revendication 10,
dans lequel
la deuxième bande de fréquences se situe dans une plage de fréquences de 57 à 66 GHz ou dans une plage de fréquences plus élevée.

12. Dispositif de couplage selon l'une quelconque des revendications précédentes en lien avec la revendication 9,
dans lequel
le dispositif d'antenne présente une antenne commune (63) pour envoyer et recevoir des signaux radio ou une antenne d'envoi (61) et une antenne de réception (62) séparée de celle-ci.

13. Dispositif de couplage selon la revendication 12,
dans lequel
l'antenne commune (63) est réalisée pour l'envoi et la réception ou l'antenne d'envoi (61) et l'antenne de réception (62) séparée de celle-ci sont réalisées chacune en tant qu'antenne à plaque.

14. Dispositif de couplage selon l'une quelconque des revendications précédentes,
dans lequel
le dispositif de communication (60, 60.1, 60.2) présente un dispositif de commande (200, 190, 210).

15. Système de couplage (300) pour le transfert de données et d'énergie sans fil,
présentant
un premier dispositif de couplage (10, 110) selon l'une quelconque des revendications précédentes, dans lequel le premier dispositif de couplage (10) peut être relié à un premier appareil électronique et/ou électrique (220), et
un deuxième dispositif de couplage (310) complémentaire, lequel peut être relié à un deuxième appareil électrique et/ou électronique (230), et présente des caractéristiques suivantes :
un boîtier (320, 330),
un dispositif de communication (360) disposé dans le boîtier (320, 330) pour le transfert de données sans fil, dans lequel le dispositif de communication (360) est réalisé pour recevoir des signaux électromagnétiques dans une direction de réception principale, et
un dispositif de transfert d'énergie sans fil disposé dans le boîtier (320, 330), qui présente un corps en ferrite (351) avec une ouverture traversante (353) et au moins une bobine à air (352) définissant une ouverture (354), qui est disposée sur le corps en ferrite (351), dans lequel la bobine à air (352), le corps en ferrite (351) et le dispositif de communication (360) sont disposés de telle manière l'un par rapport à l'autre que des signaux électromagnétiques reçus se propagent dans la direction de réception principale à travers l'ouverture traversante (353) du corps en ferrite (351) et à travers l'ouverture (354) de l'au moins une bobine à air (352) vers le dispositif de communication (360), dans lequel dans l'état couplé, l'ouverture traversante (353) du corps en ferrite (351) du premier dispositif de couplage (10, 110) est disposée en alignement par rapport à l'ouverture traversante (353) du corps en ferrite (351) du deuxième dispositif de couplage de telle sorte que les signaux électromagnétiques émis par le dispositif de communication (60) du premier dispositif de couplage (10) sont reçus par le dispositif de communication (360) du deuxième dispositif de couplage (310), et dans lequel l'au moins une bobine à air (52) du premier dispositif de couplage (10) fait office de bobine primaire et l'au moins une bobine à air (352) du deuxième dispositif de couplage (310) fait office de bobine secondaire.
